(19)

Europäisches Patentamt
European Patent Office
Office européen des brevets

(11) **EP 1 738 948 A1**

(12) **EUROPEAN PATENT APPLICATION**

(43) Date of publication:
**03.01.2007 Bulletin 2007/01**

(51) Int Cl.:
***B60K 6/04*** *(2006.01)*

(21) Application number: **06253293.2**

(22) Date of filing: **24.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.06.2005 JP 2005185831**

(71) Applicant: **NISSAN MOTOR CO., LTD.**
**Yokohama-shi,**
**Kanagawa 221-0023 (JP)**

(72) Inventor: **Tsuchikawa, Haruhisa c/o Nissan Motor Co., Ltd**
**Kanagawa, 221-0023 (JP)**

(74) Representative: **Holmes, Matthew William**
**Nissan Technical Centre Europe**
**Intellectual Property Department**
**Cranfield Technology Park**
**Bedfordshire, MK43 0DB (GB)**

(54) **Hybrid vehicle control system**

(57) A drive system for a hybrid vehicle comprises a differential including a planetary gear (PG1,PG2,PG3) set having a plurality of rotating elements and at least one engagement element (HC). At least one rotating element is connected to each of, a first motor generator (MG1), an engine (E), a drive wheel (18) and a second motor generator (MG2). The at least one engagement element selectively provides a variable speed ratio mode and a fixed speed ratio mode for the differential. The first motor generator generates electric power from output power of at least one of the engine and the second motor generator in the variable speed ratio mode. The drive system further includes a controller (5) that selects the variable speed ratio mode to charge a battery (4) of the hybrid vehicle when a state of charge of the battery is lower than a predetermined value.

FIG. 1

EP 1 738 948 A1

**Description**

The present invention is concerned with hybrid vehicle control and particularly, but not exclusively, to controlling drive modes of hybrid vehicles. Embodiments of the invention relate to a drive system and to a vehicle.

A hybrid vehicle includes a power train system with an internal combustion engine and one or more electric motor/generators. In some cases, a power train system of a hybrid vehicle may include two motor/generators and a differential with two degrees of freedom. The two degrees of freedom allow power from the internal combustion engine and/or two motor/generators to be used to drive the wheels of the vehicle. For example, the differential may include a planetary gear mechanism to provide the two degrees of freedom. The power train system may also include a brake to engage an element of the differential in order to limit the differential to a single degree of freedom.

The differential provides drive modes including an electric-vehicle (EV) drive mode in which a variable speed ratio is obtained only by the two motors, an electric- vehicle /low-brake (EV-LB) drive mode with which the vehicle is driven by two motors at a fixed transmission gear ratio where the brake is engaged, an electrical infinitely variable transmission (EIVT) drive mode with which a variable speed ratio is obtained while an engine and two motor/generators are driven, and a low-brake (LB) drive mode with which a fixed transmission gear ratio is obtained while an engine and two motor/generators are driven. The drive modes are discretionally selected from a drive mode map based on the running state of the vehicle.

A problem with conventional technology may be that, if the driving force is increased when the vehicle is running in a low speed range with a variable gear ratio drive mode, the driving force cannot be increased unless generating electric power by one or more of the motor/generators. Without such a generation of electric power, a sufficient driving force cannot be obtained because of the relationship between differential elements connected to motor/generators, the engine and the output shaft. This relationship can be illustrated on an alignment chart.

In addition, it would be advantageous to reduce changes in drive modes, which can be undesirable. For example, shift transmission shock may occur when the vehicle starts, since a LB drive mode is selected and then low brake LB is released and the variable gear ratio drive mode is selected.

It is an aim of the present invention to improve upon such conventional technology. Other aims and advantages of the invention will become apparent from the following description, claims and drawings.

Aspects of the invention therefore provide a drive system and a vehicle as claimed in the appended claims.

According to another aspect of the invention there is provided a drive system for a hybrid vehicle comprising a differential including a planetary gear set having a plurality of rotating elements and at least one engagement element, wherein at least one rotating element of the plurality of rotating elements is connected to each of, a first motor generator of the hybrid vehicle, an engine of the hybrid vehicle, a drive wheel of the hybrid vehicle and a second motor generator of the hybrid vehicle, wherein the at least one engagement element selectively provides a variable speed ratio mode and a fixed speed ratio mode for the differential, wherein the first motor generator generates electric power from output power of at least one of the engine and the second motor generator in the variable speed ratio mode and a controller that selects the variable speed ratio mode to charge a battery of the hybrid vehicle when a state of charge of the battery is lower than a predetermined value.

In an embodiment, the least one engagement element includes a high-low brake.

In an embodiment, the plurality of rotating elements includes a first rotating element, a second rotating element, a third rotating element and a fourth rotating element. The first rotating element may be connected to the engine. The second rotating element may be connected to the first motor generator. The third rotating element may be connected to the second motor generator. The fourth rotating element may be connected to the drive wheel.

In an embodiment, the planetary gear set includes a first planetary gear, a second planetary gear, and a third planetary gear. The first rotating element may be part of the third planetary gear. The second rotating element may be part of a ring gear of the second planetary gear. The third rotating element is part of the first planetary gear. The fourth rotating element may be part of a pinion carrier of the third planetary gear.

In an embodiment, the planetary gear set includes a first planetary gear, a second planetary gear, and a third planetary gear. The first rotating element may be connected to a carrier of the second planetary gear and a ring gear of the third planetary gear. The second rotating element may be connected to a ring gear of the second planetary gear. The third rotating element may be connected to a sun gear of the first planetary gear and a sun gear of the second planetary gear. The fourth rotating element may be connected to a carrier of the third planetary gear. The plurality of rotating elements may further include a fifth rotating element that connects a carrier of the first planetary gear and a fixed part of the hybrid vehicle and a sixth rotating element that connects a ring gear of the first planetary gear and a sun gear of the third planetary gear.

In an embodiment, the fifth rotating element is connected to a pinion carrier of the first planetary gear and the sixth rotating element is part of the second planetary gear.

In an embodiment, the at least one engagement element includes a first engagement element arranged between the first motor generator and a fixed part of the hybrid vehicle to selectively restrict rotation of the first motor generator,

a second engagement element to engage and disengage the engine and the first rotating element, a third engagement element to engage and disengage the second motor generator and the fifth rotating element, and a fourth engagement element to engage and disengage the fifth rotating element and a fixed part of the hybrid vehicle to selectively restrict rotation of the fifth rotating element.

In an embodiment, the second engagement element is an engine clutch, the third engagement element is a high clutch and the fourth engagement element is a low brake.

In an embodiment, the at least one engagement element further includes a fifth engagement element to engage and disengage the engine and the first motor generator and a sixth engagement element to engage and disengage the first motor generator and the second rotating element.

In an embodiment, the fifth engagement element is a series clutch,and the sixth engagement element is a motor generator clutch.

In an embodiment, the planetary gear set includes a first planetary gear, a second planetary gear, and a third planetary gear. The at least one engagement element may further include a seventh engagement element to engage and disengage a carrier of the third planetary gear and the drive wheel.

In an embodiment, the first engagement element disengages the first motor generator from the fixed part of the hybrid vehicle and the fourth engagement element engages the fifth rotating element with the fixed part of the hybrid vehicle when the variable speed ratio mode is selected.

In an embodiment, the first engagement element engages the first motor generator with the fixed part of the hybrid vehicle and the fourth engagement element engages the fifth rotating element with the fixed part of the hybrid vehicle when the fixed speed ratio mode is selected.

In an embodiment, the fourth engagement element disengages the fifth rotating element from the fixed part of the hybrid vehicle and the third engagement element engages the fifth rotating element with the second motor generator when the variable speed ratio mode is selected. In an embodiment, the fourth engagement element engages the fifth rotating element with the fixed part of the hybrid vehicle and the third engagement element engages the fifth rotating element with the second motor generator when the fixed speed ratio mode is selected.

In an embodiment, the controller selects one of the variable speed ratio mode and the fixed speed ratio mode according to vehicle driving conditions as defined by a drive mode map. The controller may expand an area of the variable speed ratio mode on drive mode map when the state of charge of the battery is lower than the predetermined value such that the battery is charged by the first motor generator.

According to another aspect of the invention there is provided a drive system for a hybrid vehicle comprising a differential including a planetary gear set having a plurality of rotating elements and at least one engagement element, wherein at least one rotating element of the plurality of rotating elements is connected to each of, a first motor generator of the hybrid vehicle, an engine of the hybrid vehicle, a drive wheel of the hybrid vehicle and a second motor generator of the hybrid vehicle, wherein the at least one of engagement element selectively restricts rotation of the first motor generator, wherein the differential selectively provides a variable speed ratio mode and a fixed speed ratio mode in response to a vehicle driving condition of a hybrid vehicle and wherein the first motor generator generates electric power in the variable speed ratio mode, wherein the at least one of engagement element restricts rotation of the first motor generator in the fixed speed ratio mode, a battery that is electrically connected to the first and second motor generators and a controller that selects the variable speed ratio mode when a state of charge of the battery is lower than a predetermined value.

In an embodiment, the plurality of rotating elements includes a first rotating element, a second rotating element, a third rotating element and a fourth rotating element. The first rotating element may be connected to the engine. The second rotating element may be connected to the first motor generator. The third rotating element may be connected to the second motor generator. The fourth rotating element may be connected to the drive wheel.

In an embodiment, the at least one engagement element includes a first engagement element arranged between the first motor generator and a fixed part of the hybrid vehicle to selectively restrict rotation of the first motor generator, a second engagement element to engage and disengage the engine and the first rotating element, a third engagement element to engage and disengage the second motor generator and the fifth rotating element, and a fourth engagement element to engage and disengage the fifth rotating element and a fixed part of the hybrid vehicle to selectively restrict rotation of the fifth rotating element.

In an embodiment, the at least one engagement element further includes a fifth engagement element to engage and disengage the engine and the first motor generator and a sixth engagement element to engage and disengage the first motor generator and the second rotating element.

In an embodiment, the planetary gear set includes a first planetary gear, a second planetary gear, and a third planetary gear, wherein the at least one of engagement element further includes a seventh engagement element to engage and disengage a carrier of the third planetary gear and the drive wheel.

In an embodiment, the first engagement element disengages the first motor generator from the fixed part of the hybrid vehicle and the fourth engagement element engages the fifth rotating element with the fixed part of the hybrid vehicle when the variable speed ratio mode is selected and the first engagement element engages the first motor generator with the fixed part of the hybrid vehicle and the fourth engagement element engages the fifth rotating element with the fixed part of the hybrid vehicle when the fixed speed ratio mode is selected.

In an embodiment, the fourth engagement element disengages the fifth rotating element from the fixed part of the hybrid vehicle and the third engagement element engages the fifth rotating element with the second motor generator when the variable speed ratio mode is selected. The fourth engagement element engages the fifth rotating element with the fixed part of the hybrid vehicle and the third engagement element engages the fifth rotating element with the second motor generator when the fixed speed ratio mode is selected.

In an embodiment, the plurality of rotating elements includes a first rotating element, a second rotating element, a third rotating element and a fourth rotating element,
wherein the planetary gear set includes a first planetary gear, a second planetary gear, and a third planetary gear, wherein the first rotating element is part of the third planetary gear, wherein the second rotating element is part of a ring gear of the second planetary gear, wherein the third rotating element is part of the first planetary gear, and wherein the fourth rotating element is part of a pinion carrier of the third planetary gear.

In an embodiment, the plurality of rotating elements further include a fifth rotating element that connected to a pinion carrier of the first planetary gear and a sixth rotating element that is part of the first planetary gear.

In one embodiment, a drive train for a hybrid vehicle comprises a differential including a set of planetary gears providing a plurality of rotating elements. At least one rotating element of the plurality of rotating elements is connected to each of a first motor generator of the hybrid vehicle, an engine of the hybrid vehicle, a drive wheel of the hybrid vehicle and a second motor generator of the hybrid vehicle. The at least one engagement element selectively provides a variable speed ratio mode and a fixed speed ratio mode for the differential. The first motor generator generates electric power from output power of at least one of the engine and the second motor generator in the variable speed ratio mode. The drive system further includes a controller that selects the variable speed ratio mode to charge a battery of the hybrid vehicle when a state of charge of the battery is lower than a predetermined value.

In another embodiment, a hybrid vehicle comprises a first motor generator, a second motor generator, an engine, an output shaft which outputs a driving force to the driving wheels, and a differential including a set of planetary gears providing a plurality of rotating elements. At least one rotating element of the plurality of rotating elements is connected to each of a first motor generator of the hybrid vehicle, an engine of the hybrid vehicle, a drive wheel of the hybrid vehicle and a second motor generator of the hybrid vehicle. The at least one engagement element selectively restricts rotation of the first motor generator and the differential selectively provides a variable speed ratio mode and a fixed speed ratio mode in response to a vehicle driving condition of a hybrid vehicle. The first motor generator generates electric power in the variable speed ratio mode. The at least one engagement element restricts rotation of the first motor generator in the fixed speed ratio mode. The system further comprises a battery that is electrically connected to the first and second motor generators and a controller that selects the variable speed ratio mode when a state of charge of the battery is lower than a predetermined value.

Within the scope of this application it is envisaged that the various aspects, embodiments and alternatives set out in the preceding paragraphs, in the claims and in the following description may be taken individually or in any combination thereof.

The present invention will now be described, by way of example only, with reference to the accompanying drawings in which:

Figure 1 is a whole system chart showing the hybrid vehicle using an engine start control device of a first embodiment;

Figure 2 is an alignment chart showing the five drive modes of the hybrid vehicle in an electric vehicle drive mode which is equipped with the engine start control device of the first embodiment;

Figure 3 is an alignment chart showing the five drive modes of the hybrid vehicle in a hybrid vehicle drive mode which is equipped with the engine start control device of the first embodiment;

Figure 4 is a diagram showing an example of the drive mode map used for selecting the drive modes of the hybrid vehicle equipped with the engine start control device of the first embodiment;

Figure 5 is an operation table of the engine, engine clutch, motor generator, low brake, high clutch, high/low brake, series clutch and motor generator clutch of the "10 drive modes" of the hybrid vehicle equipped with the engine start control device of the first embodiment;

Figure 6 is an alignment chart showing the relationship among each engagement element of the hybrid vehicle equipped with the engine start control device of the first embodiment;

Figure 7 is a flow chart showing the flow of the drive mode map change which is made by the integration controller of the first embodiment;

Figure 8 is a diagram showing the motor generator torque ratio of the first embodiment;

Figure 9 is an alignment chart of the charged state of the low-iVT drive mode of the first embodiment;

Figure 10 is a view showing the driving force lines with the low-iVT drive mode; and

Figure 11 is an alignment chart of the charged state of the high-iVT drive mode of the first embodiment.

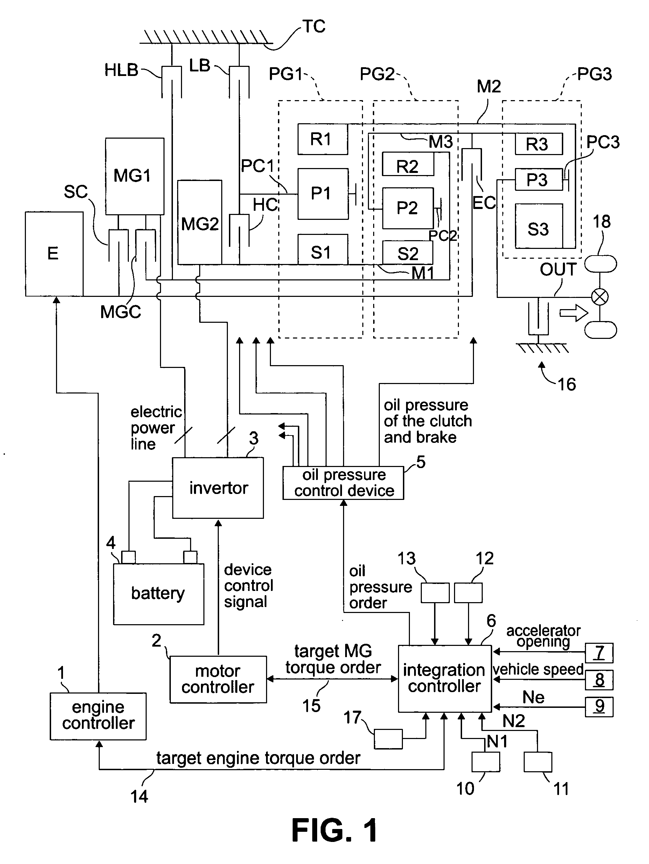

Figure 1 is a system chart showing the driving system of a hybrid vehicle where the engine start control device of the first exemplary embodiment is used. As shown in Figure 1, the driving system of the hybrid vehicle of the first exemplary embodiment is comprised of engine E, first motor generator MG1, second motor generator MG2, output shaft OUT (output shaft) and a driving force combining transmission which has a differential arrangement (first planetary gear PG1, second planetary gear PG2 and third planetary gear PG3) wherein input and output element E, MG1, MG2 and OUT are connected. The hybrid vehicle of the first exemplary embodiment is a rear-wheel driving type which drives driving wheels 18.

Engagement and release of engagement elements are controlled by the oil pressure controlled by oil pressure controlling device 5 based on the selected drive mode, the driving system of the hybrid vehicle of the first exemplary embodiment has high clutch HC, engine clutch EC, series clutch SC, motor generator clutch MGC, low brake LB and high/low brake HLB.

Engine E is a gasoline engine or diesel engine wherein the valve opening of the throttle valve is controlled based on the control command from engine controller 1.

First motor generator MG1 and second motor generator MG2 are synchronous motor generators having a rotor wherein a permanent magnet is built in and a stator where a stator coil is wrapped around, and, based on motor controller 2, they apply a three-phase alternate current which is generated by inverter 3, to each stator coil and are separately controlled.

First planetary gear PG1, second planetary gear PG2 and third planetary gear PG3 are single pinion type planetary gears with a two-degree of freedom having three elements and are part of a drive train for the hybrid vehicle. The first planetary gear PG1 is comprised of first sun gear S1, first pinion carrier PC1 which supports first pinion P1 and first ring gear R1 which is engaged in first pinion P1. The second planetary gear PG2 is comprised of second sun gear S2, second pinion carrier PC2 which supports second pinion P2 and second ring gear R2 which is engaged in second pinion P2. The third planetary gear PG3 is comprised of third sun gear S3, third pinion carrier PC3 which supports third pinion P3 and third ring gear R3 which is engaged in third pinion P3.

The first sun gear S1 is directly connected to the second sun gear S2 by first rotating member M1. The first ring gear R1 is directly connected to the third sun gear S3 by second rotating member M2. The second pinion carrier PC2 is directly connected to the third ring gear R3 by third rotating member M3. Therefore, three sets of the planetary gears, PG1, PG2 and PG3 have 6 rotating elements, first rotating member M1, second rotating member M2, third rotating member M3, first pinion carrier PC1, second ring gear R2 and third pinion carrier PC3.

The connecting relationship among driving force sources E, MG1 and MG2 and output shaft OUT and each engaging element, LB, HC, HLB, EC, SC and MGC which correspond to the 6 rotating elements of differential arrangement is described. Second motor generator MG2 is connected to the first rotating member M1 (S1 and S2). The second rotating member M2 (R1 and R3) is not connected to any of the input and output elements. Engine E is connected to the rotating member M3 (PC2 and R3) through engine clutch EC.

The first pinion carrier PC1 is connected to second motor generator MG2 through high clutch HC. Also, the first pinion carrier PC1 is connected to transmission case TC through low brake LB.

The second ring gear R2 is connected to first motor generator MG1 through motor generator clutch MGC. Also, the second ring gear R2 is connected to transmission case TC through high/low brake HLB.

Output shaft OUT is connected to the third pinion carrier PC3. Here, output shaft OUT has output shaft fixing control unit 16 (output shaft fixing control unit) which fixes output shaft OUT in case of engine starting when one of motor generators MG1 and MG2 is broken. Also, a driving force is transmitted from output shaft OUT to left and right wheels through a propeller shaft, differential and drive shaft which are not shown in the figure. Furthermore, the engine E is connected to first motor generator MG1 through series clutch SC.

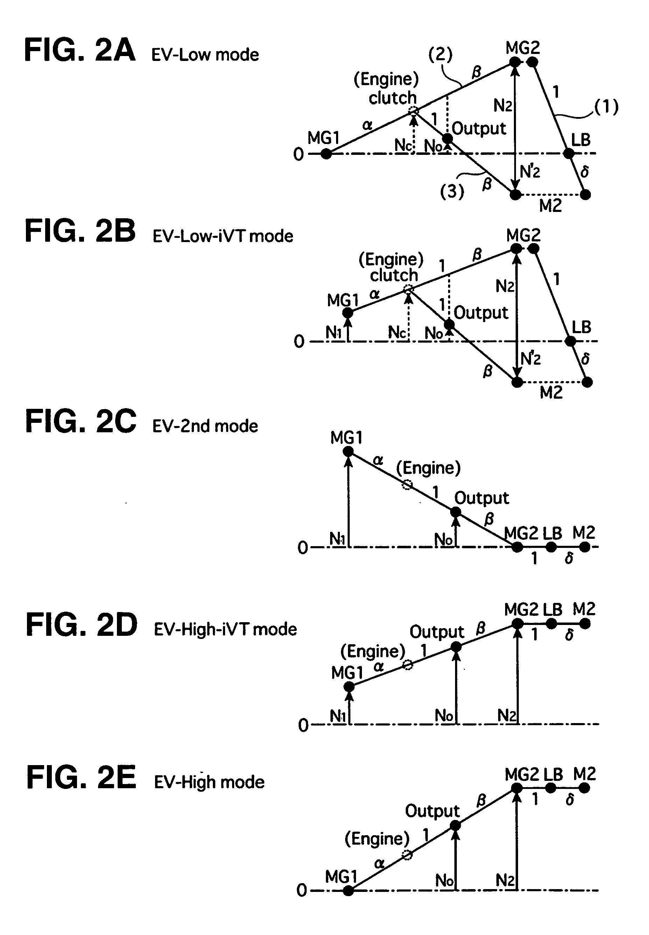

With a connecting relationship, it is possible to introduce a rigid lever drive model (lever (1) of first planetary gear PG1, lever (2) of second planetary gear PC2 and lever (3) of third planetary gear PG3) which can simply express the dynamic operation of the planetary gear row which is constituted in the order of first motor generator MG1 (R2), engine E (PC2 and R3), output shaft OUT (PC3) and second motor generator MG2 (S 1 and S2) in the alignment chart shown in Figure 2. Here, the "alignment chart" is a velocity diagram which is used in a method obtained by a drawing system which is simpler and easier to understand than a method which uses equations when the gear ratio of the differential gears are considered. The vertical axis represents the number of rotations (speed of the rotations) of each rotating element and the horizontal axis represents each rotating element such as the ring gear, carrier and sun gear so that the intervals of each rotating element become the collinear lever ratios ($\alpha$, $\beta$, $\delta$) which are determined by the gear ratio of the sun gear and the ring gear.

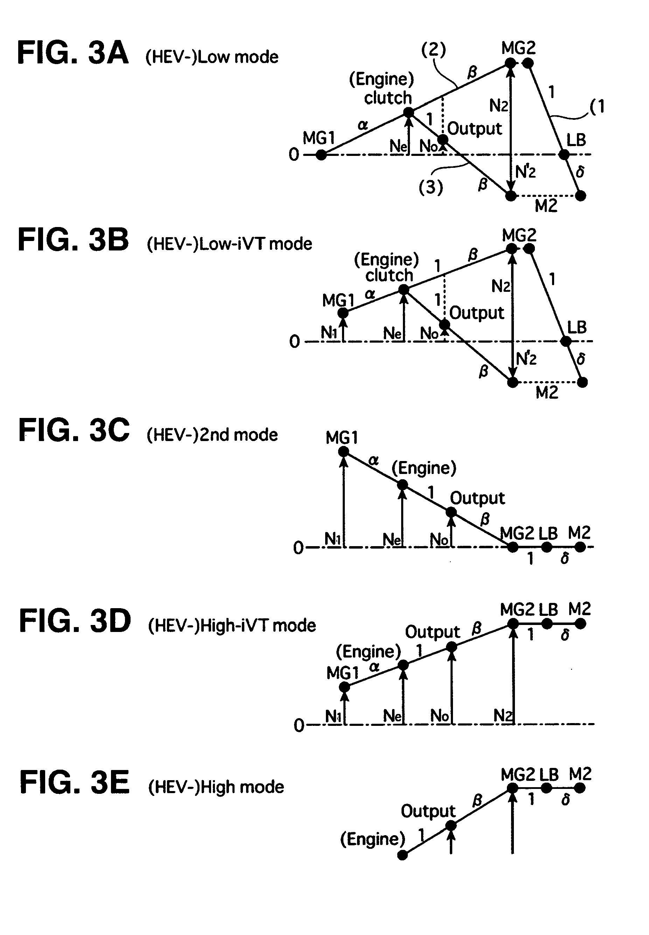

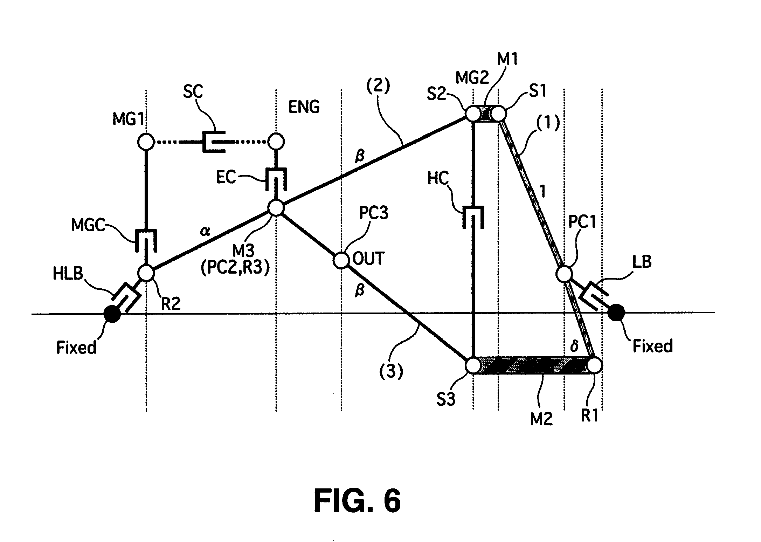

The high clutch HC is a multiple-plate friction clutch which is engaged by oil pressure. HC is placed in a position which corresponds to the rotating speed shaft of second motor generator MG2 in the alignment chart of Figure 6 and, as shown in Figure 2 and the alignment chart of Figure 3, achieves the "second-fixed speed ratio mode", "high-side variable speed ratio mode" and "high fixed speed ratio mode.

The engine clutch EC is a multiple-plate friction clutch which is engaged by oil pressure. EC is placed in a position corresponding to the rotating speed shaft of engine E in the alignment chart of Figure 6 and inputs the rotation and torque of engine E to third rotating member M3 (PC2 and R3) which is the engine input rotating element, by engagement.

The series clutch SC is a multiple-plate friction clutch which is engaged by oil pressure. SC is placed in a position where engine E is connected to first motor generator MG1 in the alignment chart of Figure 6 and connects engine E with first motor generator MG1 by engagement.

The motor generator clutch MGC is a multiple-plate friction clutch which is engaged by oil pressure. In the alignment chart of Figure 6, MGC is placed in a position where first motor generator MG1 is connected to second ring gear R2 and disengages first motor generator MG1 from second ring gear R2.

The low brake LB is a multiple-plate friction brake which is engaged by oil pressure. In the alignment chart of Figure 6, LB is placed in a position which is outside the rotating speed shaft of second motor generator MG2 and, as shown in Figure 2 and the alignment chart of Figure 3, achieves the "low fixed speed ratio mode" and "low-side variable speed ratio mode".

The high/low brake HLB is a multiple-plate friction brake which is engaged by oil pressure. In the alignment chart of Figure 6, HLB is placed in a position corresponding to the rotating speed shaft of first motor generator MG1 and, as shown in Figure 2 and the alignment chart of Figure 3, when engaged together with low brake LB, changes the transmission ratio to the "low fixed speed ratio mode" of the under drive side and when engaged together with high clutch HC, changes the transmission ratio to the "high fixed speed ratio mode" of the overdrive side.

Next, the control system of the drive train for the hybrid vehicle is described. As shown in Figure 1, the control system includes engine controller 1, motor controller 2, inverter 3, battery 4, oil pressure control device 5, integration controller 6, accelerator opening sensor 7, vehicle speed sensor 8, engine rotation number sensor 9, first motor generator rotation number sensor 10, second motor generator rotation number sensor 11, third ring gear rotation number sensor 12, second ring gear rotation number sensor 13 and wheel speed sensor 17 which detects the wheel speed of the front wheels which are the driven wheels and that of the rear wheels which are the driving wheels.

The engine controller 1 receives the command such as the target engine torque command from integration controller 6 which inputs accelerator opening AP from accelerator opening sensor 7 and engine rotation number Ne from engine rotation number sensor 9, and outputs the command to control engine operation points (Ne and Te) to, for example, the throttle valve actuator which is not shown in the figure.

The motor controller 2 receives the command such as the target motor generator toque command from integration controller 6 which inputs motor generator rotation numbers N1 and N2 from both motor generator rotation number sensors 10 and 11 by the resolver, and outputs the command to separately control motor operation points (N and T1) of first motor generator MG1 and motor operation points (N2 and T2) of second motor generator MG2 to inverter 3. Here, from the motor controller 2, information on battery charge state which expresses the charging state of battery 4 is outputted to integration controller 6.

The inverter 3 is connected to each stator coil of the first motor generator MG1 and second motor generator MG2 and creates two three-phases alternate current which are independent from the each other motor commands from motor controller 2. Battery 4 which is discharged at the power running and charged at the regenerative braking is connected to inverter 3.

The oil pressure control device 5 controls the oil pressure for the engagement and release of low brake LB, high clutch HC, high/low brake HLB, engine clutch EC, series clutch SC and motor generator clutch MGC based on the command to control the oil pressure from integration controller 6. The engagement oil pressure control and release oil pressure control include the half clutch control by the slipping engagement control and release control.

The integration controller 6 inputs information on accelerator opening AP from accelerator opening sensor 7, vehicle speed VSP from vehicle speed sensor 8, engine rotation number Ne from engine rotation number sensor 9, first motor generator rotation number N1 from first motor generator rotation number sensor 10, second motor generator rotation number N2 from second motor generator rotation number sensor 11 and input rotation number Ni for the driving force combining transmission from third ring gear rotation number sensor 12 and conducts a predetermined computation.

Then, it outputs the control command to engine controller 1, motor controller 2 and oil pressure control device 5 based on the result of the computation. Also, integration controller 6 detects the slipping state of the driving wheels based on the wheel speed from wheel speed sensor 17 and controls power to wheels having traction.

Here, integration controller 6 is connected to engine controller 1 through bi-directional communication line 14 and integration controller 6 is connected to motor controller 2 through bi-directional communication line 15 for the information exchange.

Next, the drive mode of the hybrid vehicle is described. There are 5 drive modes including a low fixed speed ratio mode (hereinafter called "low drive mode"), a low-side variable speed drive mode (hereinafter called "low-iVT drive mode"), a two-speed fixing drive mode (hereinafter called "second drive mode"), a high-side variable speed drive mode (hereinafter called "high-iVT drive mode") and a high fixed speed ratio mode (hereinafter called "high drive mode").

Five drive modes are classified into an electric vehicle drive mode (hereinafter called "EV drive mode") with which the vehicle runs by both motor generators MG1 and MG2 without using engine E and a hybrid vehicle drive mode (hereinafter called "HEV drive mode") with which the vehicle runs by using engine E and both motor generators MG1 and MG2.

The five drive modes related to the EV drive mode as shown in Figure 2 may be combined with the five drive modes related to the HEV drive mode as shown in Figure 3 to produce a total of ten available drive modes. Here, Figure 2(a) is the alignment chart of the "EV-low drive mode", Figure 2(b) is the alignment chart of the "EV-low-iVT drive mode", Figure 2(c) is the alignment chart of the "EV-second drive mode", Figure 2(d) is the alignment chart of the "EV-high-iVT drive mode" and Figure 2(e) is the alignment chart of the "EV-high drive mode". Also, Figure 3(a) is the alignment chart of the "HEV-low drive mode", Figure 3(b) is the alignment chart of the "HEV-low-iVT drive mode", Figure 3(c) is the alignment chart of the "HEV-second drive mode", Figure 3(d) is the alignment chart of the "HEV-high-iVT drive mode" and Figure 3(e) is the alignment chart of the "HEV-high drive mode".

As shown in the alignment charts of Figure 2(a) and Figure 3(a), the "low drive mode" is the low fixed speed ratio mode which is obtained by engaging low brake LB, releasing high clutch HC, engaging high/low brake HLB, releasing series clutch SC and engaging motor generator clutch MGC.

As shown in the alignment charts of Figure 2(b) and Figure 3(b), the "low-iVT drive mode" is the low-side variable speed drive mode which is obtained by engaging low brake LB, releasing high clutch HC, releasing high/low brake HLB, releasing series clutch SC and engaging motor generator clutch MGC.

As shown in the alignment charts of Figure 2(c) and Figure 3(c), the "second drive mode" is the two-speed fixing drive mode which is obtained by engaging low brake LB, engaging high clutch HC, releasing high/low brake HLB, releasing series clutch SC and engaging motor generator clutch MGC.

As shown in the alignment charts of Figure 2(d) and Figure 3(d), the "high-iVT drive mode" is the high-side variable speed drive mode which is obtained by releasing low brake LB, engaging high clutch HC, releasing high/low brake HLB, releasing series clutch SC and engaging motor generator clutch MGC.

As shown in the alignment charts of Figure 2(e) and Figure 3(e), the "high drive mode" is the high fixed speed ratio mode which is obtained by releasing low brake LB, engaging high clutch HC, engaging high/low brake HLB, releasing series clutch SC and engaging motor generator clutch MGC.

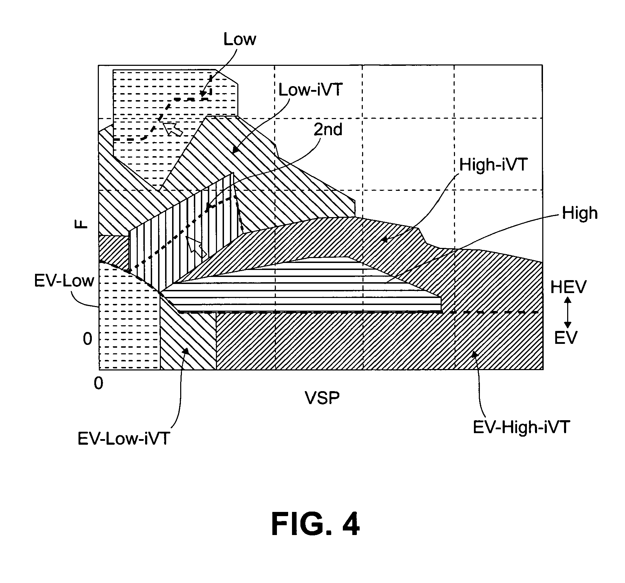

The engine start control of "10 drive modes" is performed by integration controller 6. In other words, a drive mode map shown in Figure 4 which allocates "10 drive modes" is set up beforehand in integration controller 6 based on demanded driving force Fdrv (which is obtained from accelerator opening AP) and vehicle speed VSP. For example, when the vehicle is running, integration controller 6 searches the drive mode map based on each detected value of demanded driving force Fdrv and vehicle speed VSP. An optimal drive mode is selected based on the battery charged amount and the vehicle operating point determined by VSP and Fdrv. Here, the area shown by a thick line in Figure 4 (area where the low drive mode is situated next to the low-iVT drive mode) is explained later.

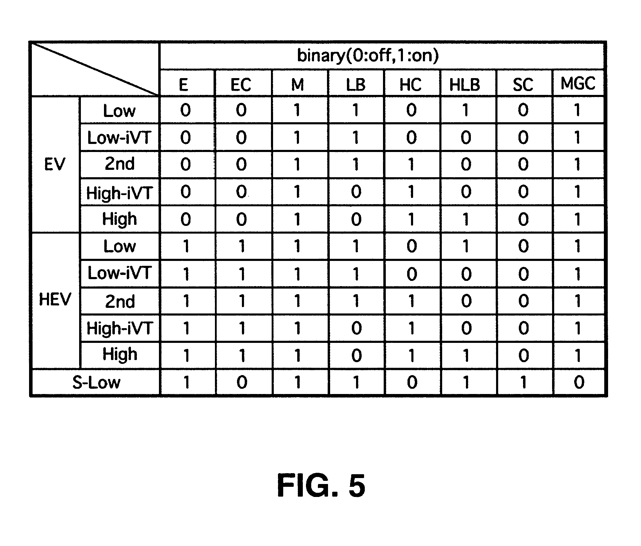

Furthermore, along with the fact that series clutch SC and motor generator clutch MGC are adopted, in addition to "10 drive modes", as shown in Figure 5, a series low fixed speed ratio mode (hereinafter called "S-low drive mode") which is selected at the time of starting the vehicle is added. The "S-low drive mode" is obtained by engaging low brake LB and high/low brake HLB, releasing engine clutch EC, high clutch HC and motor generator clutch MGC and engaging series clutch SC.

The "10 drive modes" are the drive modes for a parallel-type hybrid vehicle. On the other hand, as shown in Figure 6, the "S-low drive mode" which is the series low fixed speed ratio mode is a drive mode of a series type hybrid vehicle wherein engine E and first motor generator MG1 are separated from the alignment chart and first motor generator MG1 is driven by engine E to generate electric power and, by using battery 4 which is charged by receiving the electric power generated by the first motor generator MG1 and second motor generator MG2 is driven by the charged electric power of the battery 4.

When the drive mode shift between the "EV drive mode" and the "HEV drive mode" by selecting drive mode map, as shown in Figure 5, engine E is started and stopped and engine clutch EC is engaged and released. Also, the drive mode shifts among the five "EV drive modes" and among the five "HEV drive modes" are made in accordance with the ON/OFF Operation Table shown in Figure 5.

Among control of the drive mode shifts, for example, when the start and stop of engine E and the engagement and release of the clutch and the brake are simultaneously necessary, when the engagement and release of a plurality of the clutches and brakes are necessary or when the number of the rotations of the motor generator needs to be controlled before the start and stop of engine E or the engagement and release of the clutch and the brake, a sequence control which follows a predetermined procedure is used.

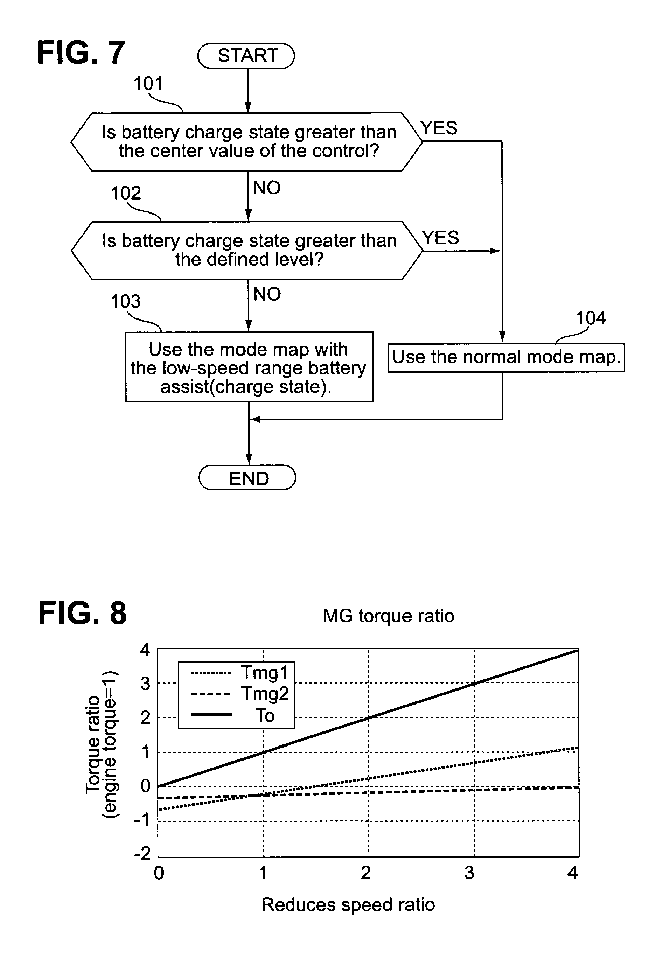

Next, the drive mode map change of the first exemplary embodiment is described based on the flow chart of Figure 7. In step 101, the battery charge state is measured and compared to a center value of control. For example the center value of control may a level at which that the battery is partially charged so that driving operation may either discharge or charge the battery. If the battery charge state is less than the center value of control, it is desirable to charge the battery and when the value is higher than the center value of control, it is desirable to discharge the battery. When it is at the center value of control or greater, the normal mode map is used (104). In step 104, a commonly-used drive mode map is used. One example is the drive mode map shown of Figure 4 that ignores the dotted line.

If the battery charge state is less than the center value of control, the charge state is compared to a defined level (102). For example, the defined level may be a low battery charge state such that charging the battery is relatively urgent to ensure that battery power is available to operate the vehicle when desirable. When it is greater than the defined level, the normal mode map is used (104). If the battery charge state is less than the defined level, a drive mode map with a low-speed range battery assist is used (103). For example, a drive mode map with a low-speed range battery assist is shown in Figure 4, where the low-iVT drive mode area and the high-iVT drive mode area are expanded by the dotted line in Figure 4.

The operation of drive mode map change is described. First, the relational expression of the number of the rotations of the low-iVT drive mode and the torque balance is shown. The equation of the number of rotations is as follows:

$$\text{Nout} = (\delta/\,(1 + \alpha + \beta)) \cdot (\beta\text{Nmg1} - \{(1 + \alpha + \beta) - \alpha\beta\} \cdot \text{Nmg2}/\,(1 + \beta)\})$$

(Equation 1)

Nmg1 and Nmg2 satisfy the following equations:

$$\text{Neng} = (1/\,(1 + \alpha + \beta)) \cdot \{(1 + \beta)\,\text{Nmg1} + \alpha\text{Nmg2}\} \quad \text{(Equation 2)}$$

$$\text{Neng} \geq 0 \qquad \text{(Equation 3)}$$

$$\text{Nmg2} \geq 0 \qquad \text{(Equation 4)}$$

$$\text{Nout} \geq 0 \qquad \text{(Equation 5)}$$

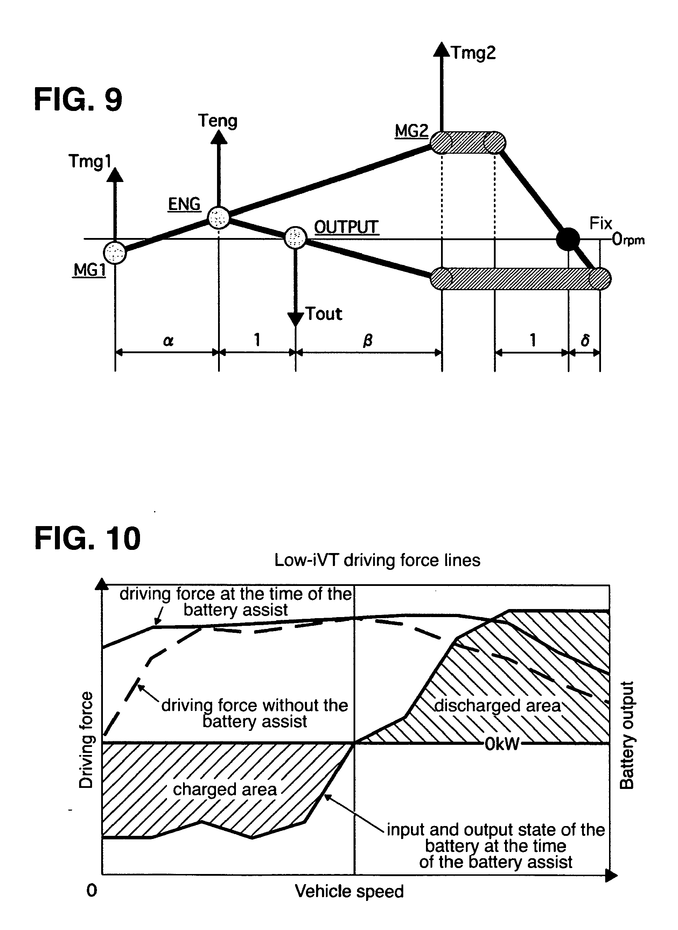

In the above equations, "Nout" represents the number of rotations of the output shaft; "Nmg1" represents the number of rotations of the first motor generator; "Nmg2" represents the number of rotations of the second motor generator; and, "Neng" represents the number of rotations of the engine. Also, $\alpha$, $\beta$ and $\delta$ each represent a lever ratio of the alignment chart (see Figure 9).

Equation 3 expresses that, the increase of the engine friction is considered and the engine is not operated with negative rotations. Equation 4 expresses that, since the number of rotations of second motor generator MG2 becomes negative during the running with the low-iVT drive mode, second motor generator MG2 is not used with the negative rotations. Equation 5 expresses the assumption that the vehicle is running forward.

The equation of the torque balance is as follows:

$$Tout = (1/\delta) \cdot \{\alpha Tmg1 - (1 + \beta) \, Tmg2\} \qquad (Equation \ 6)$$

Here, Tmg1 and Tmg2 satisfy the following equations:

$$Teng = (1/\delta) \cdot \{Tmg1 \, (\alpha\beta - (1 + \alpha + \beta) \, \delta)/ \, (1 + \beta) - \beta Tmg2\} \qquad (Equation \ 7)$$

$$Teng \leq 0 \qquad (Equation \ 8)$$

$$Tout \leq 0 \qquad (Equation \ 9)$$

In the above equations, "Tout" represents the torque of the output shaft; "Tmg1" represents the torque of the first motor generator; "Tmg2" represents the torque of the second motor generator; and, "Teng" represents the engine torque. From equation of the torque balance, to maximize the torque of the output shaft, it is necessary to output the torque of the motor generator to a maximum extent.

Figure 8 is a diagram showing the torque ratio of first motor generator torque Tmg1 and second motor generator torque Tmg2 when engine torque Teng is 1 in the low-iVT drive mode. The horizontal axis represents the speed reduction ratio and the vertical axis represents the torque ratio (speed reduction = Tout/Teng). As shown in Figure 8, in the low-iVT drive mode, the torque share of first motor generator MG1 is greater than MG2. Therefore, the upper limit of first motor generator torque Tmg1 becomes the limit of output shaft torque Tout (the upper limit of the engine torque is the same). Also, when second motor generator torque Tmg2 is a minus torque, the output is increased.

To increase the engine torque (output), it is necessary to increase the number of rotations of the engine. When number Neng of the rotations of the engine is increased at a low speed range, number Nmg1 of the rotations of the first motor generator becomes a negative number (Nmg2 becomes a positive number). With the torque and the number of the rotations which are obtained by the equations of the torque balance and the number of rotations, the outputs of each motor generator, first motor generator MG1 and second motor generator MG2, become negative (charged state).

The amount of the battery assist is the sum of the outputs of first motor generator MG1 and second motor generator MG2 which are obtained by equations of the number of rotations and the torque. Therefore, the battery assist amount is expressed by the following equation:

$$Pbat = Pmg1 + Pmg2 \qquad (Equation \ 10)$$

In equation 10, "Pbat" represents the battery output; "Pmg1" represents the first motor generator output; and "Pmg2" represents the second motor generator output. For equation 10, a positive value represents a discharged state and a negative value represents a charged state.

Figure 9 is the alignment chart of the case where the low drive mode is changed to the low-iVT drive mode when battery charge state is low. In the low-iVT drive mode at a low vehicle speed, first motor generator MG1 is controlled so that the number of rotations is negative and the torque state is positive (charged state).

Figure 10 is a diagram showing the driving force lines with the low-iVT drive mode. As shown in Figure 10, there is a charged area in a low speed range and when the battery is charged, shown as "battery assist", it is possible to generate a greater driving force than the one which does not use the battery. When battery charge state is low, it can be charged. Therefore, even in the low drive mode area in the drive mode map, a greater driving force can be obtained when the battery charges electric power which were generated by the first motor generator MG1 in the low-iVT drive mode.

As shown in the drive mode map of Figure 4, when battery charge state is low, by expanding the low-iVT drive mode area to the low drive mode side (expand in a direction of the arrow in Figure 4), the vehicle can run with the low-iVT drive mode at the time of starting without changing the drive mode from the low-iVT drive mode to the low drive mode and then back to the low-iVT drive mode.

The drive mode change from the low-drive mode to the low-iVT drive mode is described. However, the drive mode change may be from the second drive mode to the high-iVT drive mode. The high-iVT drive mode is described below.

The equations of the number of the rotations and the torque balance in the high-iVT drive mode are shown below. The equation of the number of the rotations is as follows:

$$Nout = (1/(1 + \alpha + \beta)) \cdot \{\beta Nmg1 + (1 + \alpha) Nmg2\} \quad (Equation\ 11)$$

$$Neng = (1/(1 + \alpha + \beta)) \cdot (\beta Nmg1 + \alpha Nmg2) \quad (Equation\ 12)$$

As is the case with the low-iVT drive mode, the number of the rotations of the engine and the number of rotations of the output shaft are Nmg1 and Nmg2 which satisfy the positive number of the rotations. Also, the equation of the torque balance is as follows:

$$Tout = -\alpha Tmg1 + (1 + \beta) Tmg2 \quad (Equation\ 13)$$

$$Teng = -(1 + \alpha) Tmg1 + \beta Tmg2 \quad (Equation\ 14)$$

As is the case with the low-iVT drive mode, the engine torque and the output shaft torque are Tmg1 and Tmg2 which satisfy positive torque.

From equation, the output shaft torque is determined. Also, in a low speed range, as is the case with the low-iVT drive mode, the number of rotations of second motor generator MG2 becomes negative and the outputs of first motor generator MG1 and second motor generator MG2 become negative (negative charging state). Therefore, if the battery is charged, the driving force is increased.

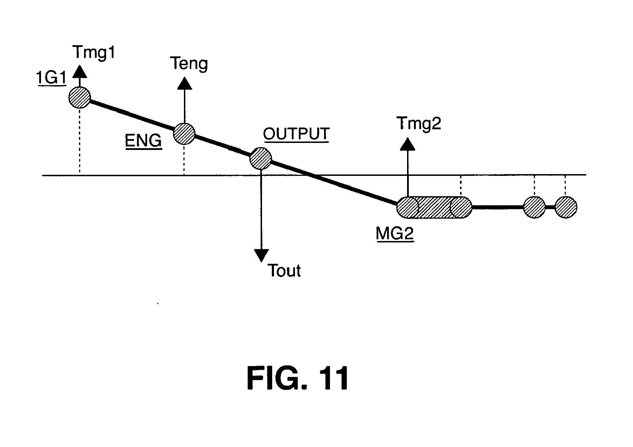

Figure 11 is the alignment chart of the case where the drive mode is changed from the second drive mode to the high-iVT drive mode when battery charge state is low. With the high-iVT drive mode in a low speed range, the number of rotations of second motor generator MG2 is made negative and its torque is made positive (charged state).

That is, when battery charge state is low, the battery can be charged. Therefore, even in the second drive mode area in the drive mode map, a greater driving force can be obtained when the battery charges electric power which were generated by the first motor generator MG1 in the high-iVT drive mode.

As shown in the drive mode map of Figure 4, when battery charge state is low, by expanding the high-iVT drive mode area to the second drive mode side (expand in a direction of the arrow in Figure 4), the vehicle can run with the high-iVT drive mode at the time of starting without changing the drive modes from the high-iVT drive mode to the second drive mode and to the high-iVT drive mode.

The hybrid vehicle of the first exemplary embodiment has the operation effects described below.

First, when a state of charge of the battery is detected and it is determined that the charging amount is lower than a predetermined value (chargeable), regardless of the selected drive mode, the drive mode is changed to the variable speed ratio drive mode where the motor generator generates electric power. As a result, it is possible to output a greater driving force than the running state where the battery is not used, such as the low drive mode and the second drive mode.

Second, when the low drive mode is selected while battery charge state is low, the drive mode is changed to the low-iVT drive mode which is the variable speed ratio drive mode where the motor generator is charged. As a result, it is possible to rapidly charge the battery. Also, when the vehicle starts, the low drive mode is usually selected and when the vehicle speed is increased, the low-iVT drive mode is selected. Therefore, a transmission shock may occur. However, by selecting the low-iVT drive mode from the start of the vehicle, it is possible to avoid transmission shock and the like. Furthermore, by using the charged electric power, the vehicle can run using the battery when it is running in a discharged area.

Third, when the second drive mode is selected while battery charge state is low, the drive mode is changed to the high-iVT drive mode which is the variable speed ratio drive mode where the motor generator generates electric power. As a result, it is possible to obtain similar operation effect as second operation effect.

Based on battery charge state, the drive mode area of drive mode map is changed so that the drive mode change is reduced. As a result, the vehicle can run with the minimum drive mode change. Also, it is possible to maximize the use of the battery thereby improving fuel consumption.

The engine start control device of the first exemplary embodiment is an example which is used for a hybrid vehicle equipped with a driving force combining transmission having a differential arrangement which is comprised of three single pinion planetary gears. For example, as disclosed in Japanese published unexamined application No. 2003-32808, it can be used for a hybrid vehicle equipped with a driving force combining transmission having a differential arrangement which is comprised of the Ravigneaux planetary gear. Furthermore, the engine start control device of the first exemplary embodiment can be used for another hybrid vehicle equipped with a driving force combining transmission having a differential arrangement which has an engine and at least two motors as the driving force and the engine, wherein the motors and the driving output shaft are connected to one another.

Various embodiments of the invention have been described. These and other embodiments are within the scope of the following claims.

This application claims priority from Japanese Patent Application No. 2005-185831, filed 27 June 2005, the contents of which are incorporated herein by reference.

**Claims**

1. A drive system for a hybrid vehicle comprising:

    differential means comprising a planetary gear set having a plurality of rotating elements and one or more engagement means; and
    control means;

    wherein at least one rotating element of the plurality of rotating elements is connected to at least one of a first motor generator of the hybrid vehicle, an engine of the hybrid vehicle, a drive wheel of the hybrid vehicle and a second motor generator of the hybrid vehicle;
    wherein the or each engagement means is arranged to selectively provide a variable speed ratio mode and a fixed speed ratio mode for the differential means;
    wherein the first motor generator is arranged to generate electrical power from a power output of at least one of the engine and the second motor generator in the variable speed ratio mode; and
    wherein the control means is arranged to select the variable speed ratio mode when a state of charge of the battery is lower than a predetermined value.

2. A drive system as claimed in claim 1 wherein the or each engagement means comprises a high-low brake.

3. A drive system as claimed in claim 1 or claim 2 wherein the plurality of rotating elements includes first, second, third and fourth rotating elements, the first rotating element being connected to the engine; the second rotating element being connected to the first motor generator; the third rotating element being connected to the second motor generator and the fourth rotating element being connected to the drive wheel.

**4.** A drive system as claimed in any claim 3 wherein the planetary gear set includes a first planetary gear, a second planetary gear, and a third planetary gear, the first rotating element being part of the third planetary gear, the second rotating element being part of a ring gear of the second planetary gear, the third rotating element being part of the first planetary gear, and the fourth rotating element being part of a pinion carrier of the third planetary gear.

**5.** A drive system as claimed in claim 3 wherein the planetary gear set includes a first planetary gear, a second planetary gear, and a third planetary gear;

wherein the first rotating element is connected to a carrier of the second planetary gear and a ring gear of the third planetary gear;

wherein the second rotating element is connected to a ring gear of the second planetary gear;

wherein the third rotating element is connected to a sun gear of the first planetary gear and a sun gear of the second planetary gear;

wherein the fourth rotating element is connected to a carrier of the third planetary gear;

wherein the plurality of rotating elements comprises:

a fifth rotating element that connects a carrier of the first planetary gear and a fixed part of the hybrid vehicle; and
a sixth rotating element that connects a ring gear of the first planetary gear and a sun gear of the third planetary gear.

**6.** A drive system as claimed in claim 5 wherein the fifth rotating element is connected to a pinion carrier of the first planetary gear and the sixth rotating element is part of the second planetary gear.

**7.** A drive system as claimed in any of claims 3 to 6 wherein the at least one engagement means includes:

a first engagement element arranged between the first motor generator and a fixed part of the hybrid vehicle for selectively restricting rotation of the first motor generator;
a second engagement element for engaging and disengaging the engine and the first rotating element;
a third engagement element for engaging and disengaging the second motor generator and the fifth rotating element, and
a fourth engagement element for engaging and disengaging the fifth rotating element and a fixed part of the hybrid vehicle to selectively restrict rotation of the fifth rotating element.

**8.** A drive system as claimed in claim 7 wherein the second engagement element is an engine clutch, the third engagement element is a high clutch and the fourth engagement element is a low brake.

**9.** A drive system as claimed in any of claims 3 to 8, wherein the at least one engagement element comprises:

a fifth engagement element for engaging and disengaging the engine and the first motor generator, and
a sixth engagement element for engaging and disengaging the first motor generator and the second rotating element.

**10.** A drive system as claimed in claim 9 wherein the fifth engagement element is a series clutch and the sixth engagement element is a motor generator clutch.

**11.** A drive system as claimed in any preceding claim wherein the planetary gear set includes a first planetary gear, a second planetary gear, and a third planetary gear and wherein the at least one of engagement element further includes a seventh engagement element for engaging and disengaging a carrier of the third planetary gear and the drive wheel.

**12.** A drive system as claimed in any of claims 7 to 11 wherein the first engagement element is arranged to disengage the first motor generator from the fixed part of the hybrid vehicle and the fourth engagement element is arranged to engage the fifth rotating element with the fixed part of the hybrid vehicle when the variable speed ratio mode is selected; and
wherein the first engagement element is arranged to engage the first motor generator with the fixed part of the hybrid vehicle and the fourth engagement element is arranged to engage the fifth rotating element with the fixed part of the hybrid vehicle when the fixed speed ratio mode is selected.

**13.** A drive system as claimed in any of claims 7 to 12 wherein the fourth engagement element is arranged to disengage the fifth rotating element from the fixed part of the hybrid vehicle and the third engagement element is arranged to engage the fifth rotating element with the second motor generator when the variable speed ratio mode is selected; and wherein the fourth engagement element is arranged to engage the fifth rotating element with the fixed part of the hybrid vehicle and the third engagement element is arranged to engage the fifth rotating element with the second motor generator when the fixed speed ratio mode is selected.

14. A drive system as claimed in any preceding claim wherein the control means is arranged to select one of the variable speed ratio mode and the fixed speed ratio mode according to vehicle driving conditions as defined by a drive mode map, the control means being arranged to expand an area of the variable speed ratio mode on drive mode map when the state of charge of the battery is lower than the predetermined value such that the battery is charged by the first motor generator.

15. A vehicle having a drive system as claimed in any preceding claim.

**FIG. 1**

**FIG. 2A** EV-Low mode

**FIG. 2B** EV-Low-iVT mode

**FIG. 2C** EV-2nd mode

**FIG. 2D** EV-High-iVT mode

**FIG. 2E** EV-High mode

**FIG. 3A** (HEV-)Low mode

**FIG. 3B** (HEV-)Low-iVT mode

**FIG. 3C** (HEV-)2nd mode

**FIG. 3D** (HEV-)High-iVT mode

**FIG. 3E** (HEV-)High mode

**FIG. 4**

| | | binary(0:off,1:on) | | | | | | | |
|---|---|---|---|---|---|---|---|---|---|
| | | E | EC | M | LB | HC | HLB | SC | MGC |
| EV | Low | 0 | 0 | 1 | 1 | 0 | 1 | 0 | 1 |
| | Low-iVT | 0 | 0 | 1 | 1 | 0 | 0 | 0 | 1 |
| | 2nd | 0 | 0 | 1 | 1 | 1 | 0 | 0 | 1 |
| | High-iVT | 0 | 0 | 1 | 0 | 1 | 0 | 0 | 1 |
| | High | 0 | 0 | 1 | 0 | 1 | 1 | 0 | 1 |
| HEV | Low | 1 | 1 | 1 | 1 | 0 | 1 | 0 | 1 |
| | Low-iVT | 1 | 1 | 1 | 1 | 0 | 0 | 0 | 1 |
| | 2nd | 1 | 1 | 1 | 1 | 1 | 0 | 0 | 1 |
| | High-iVT | 1 | 1 | 1 | 0 | 1 | 0 | 0 | 1 |
| | High | 1 | 1 | 1 | 0 | 1 | 1 | 0 | 1 |
| S-Low | | 1 | 0 | 1 | 1 | 0 | 1 | 1 | 0 |

# FIG. 5

**FIG. 6**

EP 1 738 948 A1

## FIG. 7

START

101
Is battery charge state greater than the center value of the control? — YES

NO

102
Is battery charge state greater than the defined level? — YES

NO

103
Use the mode map with the low-speed range battery assist(charge state).

104
Use the normal mode map.

END

## FIG. 8

MG torque ratio

Torque ratio (engine torque=1)

- ·········· Tmg1
- – – – Tmg2
- ——— To

Reduces speed ratio

## FIG. 9

## FIG. 10

Low-iVT driving force lines

FIG. 11

**European Patent Office**

**EUROPEAN SEARCH REPORT**

Application Number

EP 06 25 3293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 452 375 A (FORD GLOBAL TECHNOLOGIES, LLC) 1 September 2004 (2004-09-01) * paragraph [0005] - paragraph [0006] * * paragraph [0017] - paragraph [0019] * | 1 | INV. B60K6/04 |
| Y | | 2 | |
| Y | US 2005/102082 A1 (JOE SHINICHIRO ET AL) 12 May 2005 (2005-05-12) * paragraph [0035] * | 2 | |
| A | EP 1 491 427 A (NISSAN MOTOR COMPANY, LIMITED) 29 December 2004 (2004-12-29) * abstract; figure 1 * | 1-15 | |
| A | US 2005/061564 A1 (KUANG MING LANG ET AL) 24 March 2005 (2005-03-24) * abstract; figure 1 * | 1-15 | |

TECHNICAL FIELDS SEARCHED (IPC)

B60K

The present search report has been drawn up for all claims

| Place of search | Date of completion of the search | Examiner |
|---|---|---|
| Berlin | 28 September 2006 | Kyriakides, Leonidas |

EPO FORM 1503 03.82 (P04C01)

## ANNEX TO THE EUROPEAN SEARCH REPORT
## ON EUROPEAN PATENT APPLICATION NO.

EP 06 25 3293

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2006

| Patent document cited in search report | | Publication date | Patent family member(s) | | Publication date |
|---|---|---|---|---|---|
| EP 1452375 | A | 01-09-2004 | US | 2004168840 A1 | 02-09-2004 |
| | | | US | 2006070779 A1 | 06-04-2006 |
| US 2005102082 | A1 | 12-05-2005 | JP | 2005145150 A | 09-06-2005 |
| EP 1491427 | A | 29-12-2004 | JP | 2005016559 A | 20-01-2005 |
| | | | US | 2004256165 A1 | 23-12-2004 |
| US 2005061564 | A1 | 24-03-2005 | US | 2006081405 A1 | 20-04-2006 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003032808 A
- JP 2005185831 A